# EUROPEAN PATENT SPECIFICATION

(11) **EP 3 686 410 B1**
(45) Date of publication and mention of the grant of the patent: **24.05.2023**
(21) Application number: 19153185.4
(22) Date of filing: 23.01.2019
(51) Int. Cl.: F02B 75/06, F02F 7/00, F02B 67/04, F16F 15/26

(54) **A HOUSING ASSEMBLY**
GEHÄUSEANORDNUNG
ENSEMBLE DE BOÎTIER

(43) Date of publication of application: 29.07.2020
(73) Proprietor: Volvo Car Corporation, 40531 Göteborg (SE)
(72) Inventor: ARVIDSSON, Daniel, 411 02 GÖTEBORG (SE)
(74) Representative: Kransell & Wennborg KB

(56) References cited:
- EP-A2- 0 075 659
- DE-A1- 10 123 735
- US-A- 5 875 753
- US-A1- 2007 079 786
- US-A1- 2008 035 095

## Description

### Field of the Invention

The present invention relates to a housing assembly comprising a first housing part adapted to be mounted together at an inclined connecting plane. The invention further relates to a mass balance system for an internal combustion engine of a vehicle, and to a method for manufacturing a housing assembly configured to accommodate a bearing.

### Background

Internal combustion engines typically comprise a piston connected to a crankshaft via a piston rod. The piston is pivotally connected to the piston rod which is pivotally connected to the crankshaft.

In the operation of internal combustion engines the piston moves in a reciprocal motion in a cylinder volume. The motion of the piston is transferred via the piston rod to the crankshaft which is caused to rotate by the energy transferred from the moving piston.

The operation of internal combustion engines inevitably creates vibration in the engine due to the moving parts. The magnitude of the vibrations depends on various factors such as the number of cylinders and the type of engine, e.g. two- or four-stroke engines. Generally, combustion engines with higher numbers of cylinder tend to generate vibrations with lower magnitude.

The vibrations can cause disturbance such as noise and annoying mechanical vibrations for occupants in the vehicle. In addition, the vibrations in the internal combustion engine may shorten the lifetime of some engine parts.

Mass balancer systems are often installed in order to dampen the vibrations. A mass balancer system comprises counter weights which move in the opposite direction to the piston motion. In this way inertial forces generated by the pistons may be at least partly counter-acted, and consequently the vibration can be dampened.

In a mass balancer system and other systems which require the assembly of shafts and bearings, the assembly fitting accuracy of the casing for the system and the fitting of the bearings in their bore holes is of importance for the performance of the respective system. Poor fitting of the bearings in their bore holes may for example cause deformation of the bearings which impairs the performance of the bearing.

### Summary

The present disclosure describes a housing assembly which provides for improved fitting of housing parts. The present disclosure particularly addresses the problem of fitting two housing parts together such that certain structures in the housing parts can be properly aligned. This has previously proven to be especially problematic in devices where the interface plane between the housing parts is inclined. When two such housing parts are assembled together, a shear force between the housing parts, due to the inclined interface place, causes the housing halves to slide with respect to each other. Although this sliding movement may be small, it is often sufficient to misalign structures in the housing parts that are intended to be aligned for proper functioning of a final device.

Prior attempts to obtain accurate alignment of two housing parts have been made with straight sleeves which were intended to perfectly fit in assembly holes of both housing parts, but the tolerance requirements for the alignment of the structures in the housing parts proved to be difficult to overcome and the simultaneous fitting of the straight sleeves in both housing parts was difficult.

To overcome the above problems, the proposed housing assembly is obtained by mounting of conical guide sleeves in assembly holes of one of the housing parts. The conical guide sleeves are configured to guide the other housing part to a correct position. As the housing parts are for the first time mounted together and firmly attached to each other, a conical portion of the conical guide sleeve imprint on a contact surface on a contact surface of a respective assembly though-hole of the other housing part.

The imprint is a permanent deformation on the contact surface. Accordingly, if the housing parts are disassembled after the initial deformation of the contact surface, and subsequently mounted together again, the conical portion of the guide sleeves finds their previously imprinted surface in the opposite housing part and thus provides for an adequate alignment of the housing parts.

The disclosed housing assembly is particularly advantageous for so called mass balance systems which are intended for reducing vibrations caused by moving parts in an internal combustion engine. Such mass balance systems comprise bore holes for bearings and the roundness of the bore holes is of high importance for the performance of the mass balance systems. The roundness of the bore holes depend significantly on the fitting of the housing parts since the bore holes runs along the inclined connecting plane between the housing parts.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Fig. 1a-b conceptually illustrates the inventive concept;
Fig. 2 illustrates an exploded view of a conceptual mass balancer system according to embodiments of the invention;
Fig. 3 is a cross-sectional view of a housing assembly having therein bearings mounted in bore holes;
Fig. 4 is a set of illustrations of method steps according to example embodiments of the invention;
Fig. 5 is a flow-chart of a method steps according to embodiments of the invention;
Fig. 6 is a set of illustrations of method steps according to an example embodiments of the invention; and
Fig. 7 is a flow-chart of a method steps according to embodiments of the invention.

### Detailed Description of Example Embodiments

In the present detailed description, various embodiments of the housing assembly and method according to the present invention are described. However, this invention may be embodied in many different forms and should not be construed as limited to the embodiments set forth herein; rather, these embodiments are provided for thoroughness and completeness, and fully convey the scope of the invention to the skilled person. Like reference characters refer to like elements throughout.

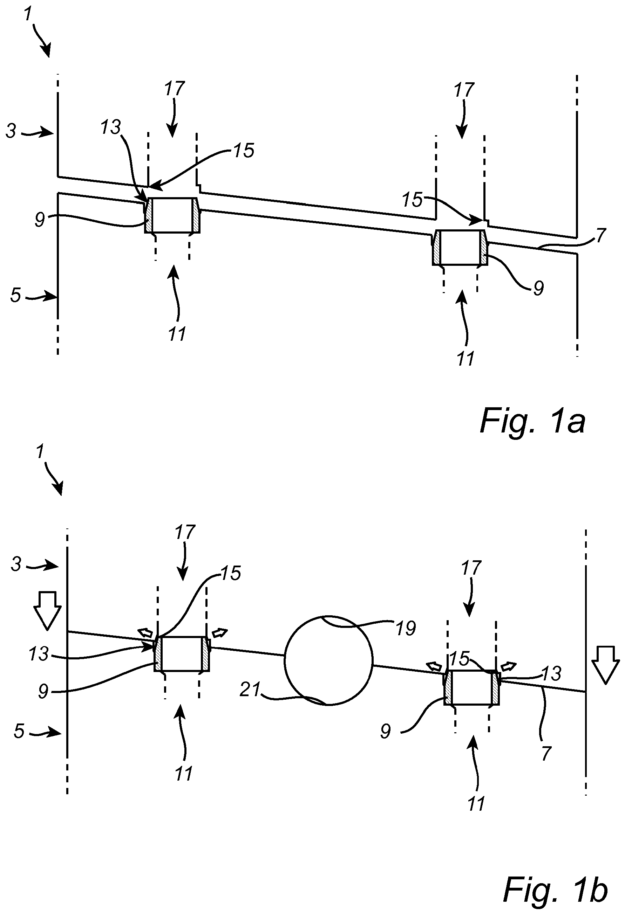

Fig. 1a conceptually illustrates an example housing assembly 1 comprising a first housing part 3 and a second housing part 5 separable from each other, and adapted to be mounted together at an inclined connecting plane 7. There is a conical guide sleeve 9 arranged in a respective assembly hole 11 of the second housing part 5.

Now turning to fig. 1b, which illustrates that the housing assembly 1 is obtainable by mounting the first housing part 3 and the second housing part 5 together so that a conical portion 13 of at least one conical guide sleeve 9 arranged in a respective assembly hole 11 of the second housing part 5 imprint on a contact surface 15 in a respective assembly though-hole 17 of the first housing part 3.

When the housing parts are assembled and still maintained together structures 19 and 21 can be made in the respective housing part 3, 5. The structures are made with the conical guide sleeves in a firm contact with the imprinted contact surface 15.

The imprint achieved by the conical guide sleeves the first time the housing parts are assembled together allows for them to make their own fit in the respective assembly hole. Accordingly, if the housing parts 3, 5 are disassembled and subsequently assembled again, the accuracy of alignment of the structures 17 and 21 can be improved compared to using e.g. straight sleeves which are subject to unreasonable tolerance requirements for using more than a single or perhaps a couple of straight sleeves.

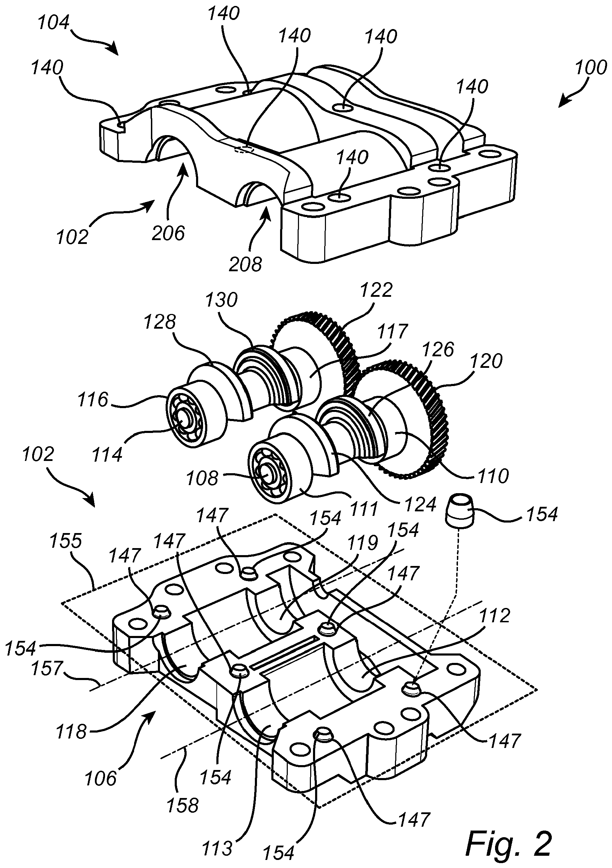

Fig. 2 illustrates an exploded view of a device in the form of a mass balance system 100 for a combustion engine of a vehicle. The mass balance system 100 comprises a housing assembly 102 including a first housing part 104 and a second housing part 106. Here, the first housing part 104 may generally be referred to as the upper housing part 104 and the second housing part may be referred to as the lower housing part 106.

The housing assembly 102 is configured to accommodate bearings 110 and 111 arranged in respective bore holes having a common longitudinal axis 158. The bore holes are formed from the arc-shaped bore hole portions 112 and 113 in the second housing part 106 and respective arc-shaped bore hole portions in the first housing part 104. The bearings 110 and 111 are arranged to provide a rotational motion for the shaft 108 in the housing assembly 102.

Furthermore, a second shaft 114 is also accommodated in the housing assembly 102. Bearings 116 and 117 are arranged in respective bore holes with longitudinal axis 157 formed from the arc-shaped bore hole portions 118 and 119 in the second housing part 106 and respective arc-shaped bore hole portions in the first housing part 104. The bearings 116 and 117 are arranged to provide a rotational motion for the shaft 114 in the housing assembly 102.

That the first housing part 104 and second housing part 106 each comprises a respective arc-shaped bore hole portion means that when the first and second housing parts are properly assembled together, the arc-shaped bore hole portions jointly creates or a bore hole for the arrangement of a bearing.

Furthermore, shown as an example for the sake of completeness, a cogwheel 120 attached on the shaft 108 is engaged with a cogwheel 122 attached to the shaft 114. Thus, as the first shaft 108 is rotated, the first cogwheel 120 causes the second cogwheel 122 to rotate and thereby also the second shaft 114.

Balance masses 124 and 126 are attached to the first shaft 108 and balance masses 128 and 130 are attached to the second shaft 114. The balance masses 124, 126, 128, 130 are asymmetric about the rotational axis 157 and 158 of the respective shaft 108 and 114 in order to provide a moment when the shafts 108, 114 rotate. The rotation of the shafts 108, 114 which is synchronized with the motion of the pistons which thereby causes a rotation of the balance masses 124, 126, 128, 130 which is also synchronized with the motion of the pistons. The configuration of the synchronization for noise and vibration cancellation is considered known to the skilled person and will not be further discussed herein.

The inclined contacting plane 155 is a consequence of that the gear wheels 120, 122 to be arranged in the housing assembly 102 need a specific relative spatial relationship in order to allow for the external gear wheel connected to a crankshaft to only engage with one of the gear wheels in the housing. For example, the cogwheel 122 may be arranged further from the bottom of the second housing part 106 compared to the cogwheel 120, such that the cogwheels 122 and 120 are vertically displaced form each other.

The first housing part 104 and the second housing part 106 are held together jointly by elongated fastening means (not shown in fig. 2) arranged in assembly through-holes 140 of the first housing part 104 and which are tightened in assembly holes 147 in the second housing part 106, e.g. by threads in the assembly holes 147.

The inclined connection plane 155 causes a shear force between the prior art housing parts when they are tightened together. This results in difficulties maintaining the roundness of the bore holes during assembly. With the conical guide sleeves 154 this problem is advantageously alleviated and the roundness of the bore holes is improved compared to prior art solutions.

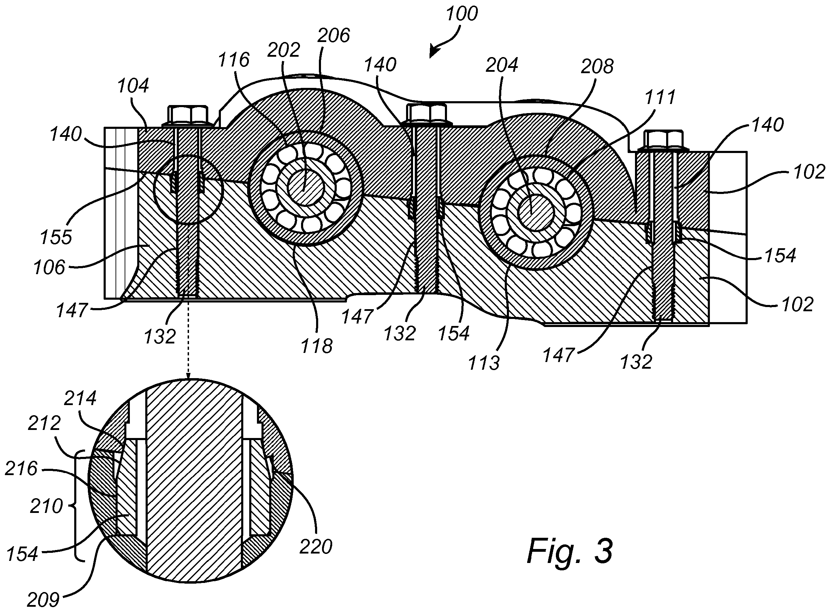

The conical guide sleeves 154 are arranged in an upper portion of the assembly holes 147 of the second housing part 106. The conical guide sleeves 154 rest on a shoulder in the assembly hole of the second housing part 106. This will be described in more detail with reference to fig. 3.

The connecting plane 155 between the first housing part 104 and the second housing part 106 is an inclined connecting plane 155. The inclination is from one side adjacent to one of the bore holes and across to the opposite side of the second bore hole, i.e. transversal to the bore holes. The inclined connecting plane 155 may divide the bore hole in a plane parallel with a plane comprising the longitudinal axis 157 or 158.

Preferably, the inclined connecting plane comprises the longitudinal axes 157-158 of both bore holes. In other words, the first and the second housing parts 104, 106 may be respective housing halves. This facilitates the mounting of the bearings in the bearing bore holes when the housing parts are separated from each other. In case of several bore holes their longitudinal axes 157-158 are preferably parallel.

Fig. 3 is a cross-sectional view of a mass balance system 100 comprising a housing assembly 102. As in fig. 2, the housing assembly 102 comprises the first housing part 104, here shown as an upper housing part 104, and the second housing part 106 is here shown as a lower housing part 106. The housing assembly 102 is configured to accommodate a bearing.

The first housing part 104 and the second housing part 106 are in contact along the inclined connecting plane 155. The inclination runs transversal to the bore holes 202 and 204. Bearings 116 and 111 are arranged in the bore holes 202 and 204. The bore holes 202 and 204 are formed from the arc-shaped bore hole portions 118 and 113 of the second housing part 106 and the arc-shaped bore hole portions 206 and 208 of the first housing part 104. The inclined connecting plane 155 here comprises the longitudinal axes of both the bore holes 202 and 204.

The assembly through-holes 140 runs through the entire first housing part 104 such that an elongated fastening means can reach through the first housing part 104 and into a corresponding assembly hole 147 in the second housing part 106. The assembly hole 147 in the second housing part 106 does not necessarily have to be through-holes, but should provide for the elongated fastening means to firmly attach the first housing part to the second housing part.

Elongated fastening element in the form of bolts 132 are here shown arranged in the through-holes 140 of the first housing part 104 and are tightened in corresponding assembly holes 147 of the second housing part 106 via e.g. threads in the assembly holes 147. The bolts 132 ensure that the first housing part 104 and the second housing parts 106 are mechanically fixated to each other. Another possible option is to tighten the bolts 132 with nuts. In such case the assembly holes 147 in the second housing part 106 run entirely through the second housing part 106, and the nut is tightened outside the second housing part.

In each of the assembly holes 147 of the second housing part 106 is a conical guide sleeve 154 arranged. As is more clearly seen in the zoomed up image, the conical guide sleeve 154 rests on a shoulder 209 in an upper portion 210 of the assembly hole 147 of the second housing part 106. Accordingly, an outer diameter of the conical guide sleeve 154 is larger than an inner diameter of the assembly hole 147 below the shoulder 209.

The conical guide sleeve 154 comprises conical portion 212 which intercepts with the inclined interconnecting plane 155 and into the assembly through-hole 140 of the first housing part 104. Accordingly, that the conical guide sleeve intercepts the connecting plane 155 means that the conical guide sleeve 154 reaches into the corresponding assembly hole in the first housing part 104, when the housing parts 104, 106 are assembled together. Thus, the length of the conical guide sleeve 154 is longer than the distance from the shoulder 209 in the assembly hole 147 of the second housing part 106, to the inclined connecting plane 155.

The conical guide sleeves 154 are used for creating its own imprinted seat in the first housing part assembly through-hole 140. The individual imprinted seats in the first housing part provide for a gap free fit of the housing parts 104 and 106. When the first housing part 104 and the second housing part 106 are disassembled for mounting of the bearing after forming the bore holes, the conical guide sleeves 154 which have already imprinted on the first housing part 104 will guide the housing parts 104 and 106 together such that the roundness of the bore holes for the bearing can be maintained.

With improved roundness grinding noise problem in prior art systems due to deformation of the bearing can be at least partly alleviated.

Here, the first housing part 104 and the second housing part 106 are shown mounted together with the bolts 132. In such case, the conical portion 212 of the conical guide sleeve 154 imprints on a contact surface 214 in the assembly though-hole 140 in the first housing part 106. An outer diameter of the conical portion 212 is thus larger than an inner diameter of the assembly through-hole 140 so that the conical portion 212 can imprint on the contact surface 214 of the assembly through-hole 140 of the first housing part 104. The contact surface 214 may comprise a shoulder portion 220 for the conical guide sleeve to imprint on. The conical guide sleeves 154 are configured to imprint in the contact surface prior to forming the bore hole in the housing assembly 102.

Accordingly, when the housing parts 104 and 106 are for the first time assembled together, the conical guide sleeves 154 imprints on the contact surface 214 and creates its own seat. In this position with the housing parts 104 and 106 assembled together, the bore holes 202 and 204 may be formed by machining, e.g. drilling. The housing parts 104 and 106 are subsequently separated and the bearings 116 and 111 are mounted. Subsequently, the housing parts 104 and 106 are mounted together, whereby the conical guide sleeves 154 are configured to find their imprinted seat in the contact surface 214 whereby the same position of the housing parts 104 and 106 is found. In this way, the roundness of the bore holes 202 and 204 from the machining step can be maintained, despite the inclined contacting plane which may cause a shear force between the housing parts 104, 106.

The material of the conical guide sleeves is harder than the material of at least the contact surface 214. The hardness of the materials are such that the conical guide sleeves may imprint on at least the first housing part. Preferably, the materials of the housing parts 104 and 106 as well as the conical guide sleeves 154 are metals. For example, the material of the housing parts may be aluminum and the conical guide sleeves may be made from steal, although other material combinations are conceivable.

In this currently described example embodiment, the conical guide sleeve 154 comprises a straight sleeve portion 216 arranged in the upper portion 210 of the assembly hole 147 of the second housing part 106. This allows for facilitated fitting of the conical guide sleeve 154 in the assembly hole 147.

Furthermore, in this currently described example embodiment, the assembly holes in the second housing part 106 are assembly through-holes although this is not strictly required.

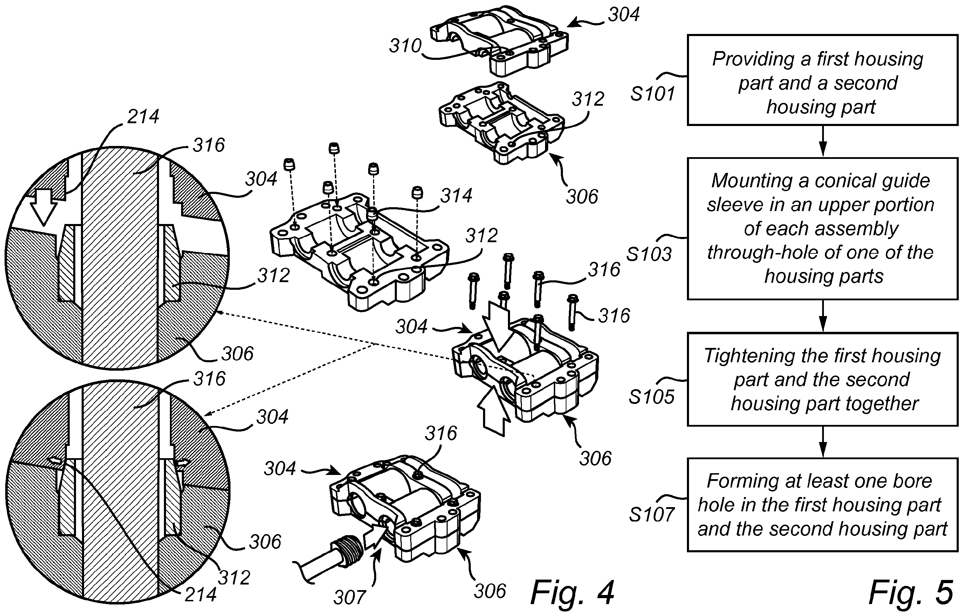

Fig. 5 is a flow-chart of method steps according to embodiments of the invention which will be described in conjunction with respective illustrations of the method steps shown in fig. 4.

Firstly, a first housing part 304 and a second housing part 306 are provided in step S101. The first housing part 304 and the second housing part 306 are adapted to be joined together at an inclined connecting plane. Each housing part comprises plurality of assembly holes 310, 312 adapted for receiving elongated fastening elements adapted for mechanically holding the first housing part 304 and the second housing part 306 together. The assembly holes 310 in the first housing part 304 are through-holes.

Subsequently, a conical guide sleeve 314 is mounted in an upper portion of each assembly through-hole 312 in the second housing part 306 in step S103. The conical guide sleeves 314 are arranged resting on a shoulder in the upper portion of the respective assembly hole 312. The conical guide sleeves 314 intercept the inclined connecting plane when arranged to rest on the shoulder.

When the conical guide sleeve 314 are in place in the assembly through-hole 312, the first housing part 304 and the second housing part 306 are tightened together using elongated fastening elements 316 which are tightened in the assembly through-holes 310 of the first housing part 304 and arranged through the conical guide sleeves 314, in step S105. By firmly tightening elongated fastening elements, the conical guide sleeves 314 imprint on a contact surface in the through-hole of the first housing part 304.

While the first housing part 304 and the second housing part 306 are firmly held together by the elongated fastening elements 316, at least one bore hole 307 is formed in the first housing part 304 and the second housing part 306 in step S107. The bore hole 307 is formed to intercept the inclined connecting plane along its entire longitudinal axis.

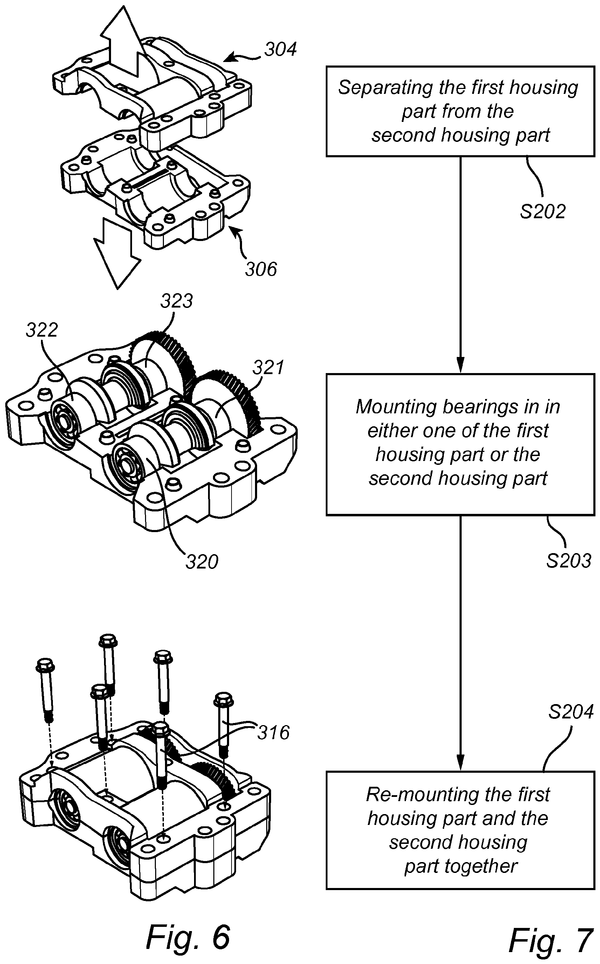

In addition, and now turning to figs. 6 and 7, the elongated fastening elements are untightened in step S202 for separating the first housing part 304 from the second housing part 306.

While the first housing part 304 and the second housing part 306 are separated, bearings 320-323 are mounted in an arc-shaped bore hole portion in step S203 in either one of the first housing part 304 or the second housing part 306 with the longitudinal axis of the bore hole coinciding with the axis of rotation provided by the bearing.

Subsequently, in step S204 the first housing part and the second housing part are re-mounted together using the elongated fastening elements 316 tightened in the assembly holes and arranged through the conical guide sleeves 314, wherein the conical guide sleeves 314 guide the first housing part 304 to an assembly position by the imprinted contact surface in the first housing part 304.

Accordingly, the first and second housing parts are firstly assembled to form an entire housing assembly but with no bore holes for the arrangement of bearings. The first and second housing parts are firmly tightened so that the conical guide sleeves imprints on the contact surface in the assembly hole of the second housing part. Next, the bore holes are formed.

A vehicle in accordance with the invention may be any vehicle operative on a road, such as a car, a truck, a lorry, a bus, etc.

Although the figures may show a sequence the order of the steps may differ from what is depicted. Also two or more steps may be performed concurrently or with partial concurrence. Such variation will depend on the software and hardware systems chosen and on designer choice. All such variations are within the scope of the disclosure.

The person skilled in the art realizes that the present invention by no means is limited to the preferred embodiments described above. On the contrary, many modifications and variations are possible within the scope of the appended claims. For example, although the present disclosure is mainly with reference to a mass balance system for a vehicle, the inventive concept is applicable to any device comprising to housing parts connected at an inclined plane and which benefit from accurate alignment of the two housing parts. The device may be from technical fields outside of automotive applications.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A housing assembly (1; 100) comprising:
- a first housing part (3;104) and a second housing part (5;106) separable from each other, and adapted to be mounted together at an inclined connecting plane (7;155);
the second housing part comprises at least one assembly hole (11) in which a respective conical portion (13;212) of a conical guide sleeve (9; 154) is arranged, and the first housing part comprises respective assembly holes (17) comprising a contact surface (15) on which the respective conical guide portion imprint, and
bolts (132) arranged in the through-holes of the first housing part and tightened in the respective assembly hole of the second housing part, wherein the inclined connecting plane is arranged so that a longitudinal axis of the bolts is not perpendicular to the plane (7;155).

2. The housing assembly according to claim 1, wherein the contact surface in the respective assembly through-hole comprises a shoulder portion (220).

3. The housing assembly according to any one of the claims 1 and 2, comprising at least two bore holes.

4. The housing assembly according to claim 3, wherein the longitudinal axes of the bore holes are parallel.

5. The housing assembly according to any one of claims 3 and 4, wherein the connecting plane divides the bore hole in a plane parallel with a plane comprising a longitudinal axis of at least one of the bore holes.

6. The housing assembly according to any one of claims 3 to 5, wherein a longitudinal axis of the bore holes lies entirely in the connecting plane.

7. The housing assembly according to any one of the preceding claims, wherein the conical guiding sleeves comprises a straight sleeve portion (216) and the conical portion.

8. A device comprising the housing assembly according to any one of the preceding claims.

9. The device according to claim 8, wherein the device is a mass balance system for an internal combustion engine of a vehicle, the mass balance system including a bearing and shaft assembly accommodated in the housing assembly.

10. A method for manufacturing a housing assembly configured to accommodate a bearing, the method comprises:
- providing (S101) a first housing part and a second housing part adapted to be joined together at an inclined connecting plane;
- arranging (S103) at least one conical guide sleeve (154) in a respective assembly hole of one of the first housing part or the second housing part so that a conical portion (212) of the conical guide sleeve(s) intercept the inclined connecting plane when arranged in the assembly hole, and
- mounting (S105) the first housing part and the second housing part together using bolts tightened in the assembly through-holes so that the conical portion of the conical guide sleeves imprint on a contact surface (214) in a respective assembly through-hole of the other one of the first housing part and the second housing part, wherein the inclined connecting plane is arranged so that a longitudinal axis of the bolts is not perpendicular to the plane (7;155).

11. The method according to claim 10, comprising:
- forming (S107) at least one bore hole in the first housing part and the second housing part with the bore hole intercepting the inclined connecting plane along its entire longitudinal axis when the housing part are mounted together, so that arch-shaped bore hole portions are formed in each of the first housing part and the second housing part.

12. The method according to claim 11, comprising:
- separating (S202) the first housing part from the second housing part;
- mounting (S203) bearings in arc-shaped bore hole portions in either one of the first housing part or the second part with the longitudinal axis of the bore hole coinciding with the axis of rotation provided by the bearing.

13. The method according to claim 12, comprising:
- re-mounting (S204) the first housing part and the second housing part together using an bolts tightened in the assembly holes and arranged through the conical guide sleeves, wherein the guide sleeves guide the first housing part to an assembly position by the imprinted contact surface in the first housing part.

14. The method according to any one of claims 10 to 13, wherein mounting the first housing part and the second housing part together includes tightening (S105) the first housing part and the second housing part together using the bolts tightened in the assembly through-holes.

## Patentansprüche

1. Gehäuseanordnung (1; 100), Folgendes umfassend:
- einen ersten Gehäuseteil (3; 104) und einen zweiten Gehäuseteil (5; 106), die voneinander trennbar und dazu eingerichtet sind, an einer geneigten Verbindungsebene (7; 155) zusammenmontiert zu sein;
wobei der zweite Gehäuseteil mindestens eine Montagebohrung (11) umfasst, in der ein jeweiliger konischer Abschnitt (13; 212) einer konischen Führungshülse (9; 154) angeordnet ist, und wobei der erste Gehäuseteil jeweilige Montagebohrungen (17) umfasst, die eine Kontaktfläche (15) umfassen, auf die der jeweilige konische Führungsabschnitt abdrückt, und Bolzen (132), die in den Durchgangsbohrungen des ersten Gehäuseteils angeordnet und in der jeweiligen Montagebohrung des zweiten Gehäuseteils angezogen sind, wobei die geneigte Verbindungsebene derart angeordnet ist, dass eine Längsachse der Bolzen nicht senkrecht zur Ebene (7; 155) ist.

2. Gehäuseanordnung nach Anspruch 1, wobei die Kontaktfläche in der jeweiligen Montagedurchgangsbohrung einen Schulterabschnitt (220) umfasst.

3. Gehäuseanordnung nach einem der Ansprüche 1 und 2, umfassend mindestens zwei Bohrlöcher.

4. Gehäuseanordnung nach Anspruch 3, wobei die Längsachsen der Bohrlöcher parallel sind.

5. Gehäuseanordnung nach einem der Ansprüche 3 und 4, wobei die Verbindungsebene das Bohrloch in einer Ebene teilt, die parallel zu einer Ebene verläuft, die eine Längsachse mindestens eines der Bohrlöcher umfasst.

6. Gehäuseanordnung nach einem der Ansprüche 3 bis 5, wobei eine Längsachse der Bohrlöcher vollständig in der Verbindungsebene liegt.

7. Gehäuseanordnung nach einem der vorstehenden Ansprüche, wobei die konischen Führungshülsen einen geraden Hülsenabschnitt (216) und den konischen Abschnitt umfassen.

8. Vorrichtung, umfassend die Gehäuseanordnung nach einem der vorstehenden Ansprüche.

9. Vorrichtung nach Anspruch 8, wobei die Vorrichtung ein Massenausgleichssystem für einen Verbrennungsmotor eines Fahrzeugs ist, wobei das Massenausgleichssystem eine in der Gehäuseanordnung aufgenommene Lager- und Wellenanordnung umfasst.

10. Verfahren zur Herstellung einer Gehäuseanordnung, die dazu ausgelegt ist, ein Lager aufzunehmen, wobei das Verfahren Folgendes umfasst:
- Vorsehen (S101) eines ersten Gehäuseteils und eines zweiten Gehäuseteils, die dazu eingerichtet sind, an einer geneigten Verbindungsebene miteinander verbunden zu werden;
- Anordnen (S103) mindestens einer konischen Führungshülse (154) in einer jeweiligen Montagebohrung des ersten Gehäuseteils oder des zweiten Gehäuseteils, sodass ein konischer Abschnitt (212) der konischen Führungshülse(n) die geneigte Verbindungsebene schneidet, wenn er in der Montagebohrung angeordnet ist, und
- Zusammenmontieren (S105) des ersten Gehäuseteils und des zweiten Gehäuseteils unter Verwendung von in den Montagebohrungen angezogenen Bolzen, sodass der konische Abschnitt der konischen Führungshülsen in einer jeweiligen Montagedurchgangsbohrung des anderen des ersten Gehäuseteils und des zweiten Gehäuseteils auf eine Kontaktfläche (214) abdrückt, wobei die geneigte Verbindungsebene derart angeordnet ist, dass eine Längsachse der Bolzen nicht senkrecht zur Ebene (7; 155) ist.

11. Verfahren nach Anspruch 10, Folgendes umfassend:
- Ausbilden (S107) mindestens eines Bohrlochs im ersten Gehäuseteil und im zweiten Gehäuseteil, wobei das Bohrloch die geneigte Verbindungsebene entlang seiner gesamten Längsachse schneidet, wenn die Gehäuseteile zusammenmontiert sind, sodass bogenförmige Bohrlochabschnitte jeweils im ersten Gehäuseteil und im zweiten Gehäuseteil ausgebildet werden.

12. Verfahren nach Anspruch 11, Folgendes umfassend:
- Trennen (S202) des ersten Gehäuseteils vom zweiten Gehäuseteil;
- Montieren (S203) von Lagern in bogenförmigen Bohrlochabschnitten im ersten Gehäuseteil oder im zweiten Gehäuseteil, wobei die Längsachse des Bohrlochs mit der vom Lager vorgesehenen Drehachse zusammenfällt.

13. Verfahren nach Anspruch 12, Folgendes umfassend:
- erneutes Zusammenmontieren (S204) des ersten Gehäuseteils und des zweiten Gehäuseteils unter Verwendung von in den Montagebohrungen angezogenen und durch die konischen Führungshülsen angeordneten Bolzen, wobei die Führungshülsen durch die abgedrückte Kontaktfläche im ersten Gehäuseteil den ersten Gehäuseteil in eine Montageposition führen.

14. Verfahren nach einem der Ansprüche 10 bis 13, wobei das Zusammenmontieren des ersten Gehäuseteils und des zweiten Gehäuseteils das Zusammenziehen (S105) des ersten Gehäuseteils und des zweiten Gehäuseteils unter Verwendung der in den Montagebohrungen angezogenen Bolzen umfasst.

## Revendications

1. Ensemble logement (1 ; 100) comprenant :
- une première partie de logement (3 ; 104) et une seconde partie de logement (5 ; 106) séparables l'une de l'autre, et propres à être assemblées au niveau d'un plan de raccordement incliné (7 ; 155) ;
la seconde partie de logement comprenant au moins un trou d'assemblage (11) dans lequel est placée une partie conique (13 ; 212) respective d'un manchon de guidage conique (9 ; 154), et la première partie de logement comprenant des trous d'assemblage (17) respectifs comprenant une surface de contact (15) que la partie de guidage conique respective marque, et des boulons (132) placés dans les trous traversants de la première partie de logement et serrés dans le trou d'assemblage respectif de la seconde partie de logement, le plan de raccordement incliné étant placé de telle sorte qu'un axe longitudinal des boulons ne soit pas perpendiculaire au plan (7 ; 155).

2. Ensemble logement selon la revendication 1, dans lequel la surface de contact dans le trou traversant d'assemblage respectif comprend une partie formant épaulement (220).

3. Ensemble logement selon l'une ou l'autre des revendications 1 et 2, comprenant au moins deux trous alésés.

4. Ensemble logement selon la revendication 3, dans lequel les axes longitudinaux des trous alésés sont parallèles.

5. Ensemble logement selon l'une ou l'autre des revendications 3 et 4, dans lequel le plan de raccordement divise le trou alésé dans un plan parallèle à un plan comprenant un axe longitudinal d'au moins un des trous alésés.

6. Ensemble logement selon l'une quelconque des revendications 3 à 5, dans lequel un axe longitudinal des trous alésés est situé entièrement dans le plan de raccordement.

7. Ensemble logement selon l'une quelconque des revendications précédentes, dans lequel les manchons de guidage coniques comprennent une partie de manchon droite (216) et la partie conique.

8. Dispositif comprenant l'ensemble logement selon l'une quelconque des revendications précédentes.

9. Dispositif selon la revendication 8, le dispositif étant un système de masses d'équilibrage pour un moteur à combustion interne d'un véhicule, le système de masses d'équilibrage comprenant un ensemble de paliers et d'arbres logé dans l'ensemble logement.

10. Procédé de fabrication d'un ensemble logement conçu pour loger un palier, le procédé comprenant :
- préparer (S101) une première partie de logement et une seconde partie de logement propres à être assemblées au niveau d'un plan de raccordement incliné ;
- placer (S103) au moins un manchon de guidage conique (154) dans un trou d'assemblage respectif de l'une de la première partie de logement et la seconde partie de logement de telle sorte qu'une partie conique (212) du ou des manchon(s) de guidage conique(s) croise le plan de raccordement incliné lorsqu'il(s) est/sont placé(s) dans le trou d'assemblage, et
- assembler (S105) la première partie de logement et la seconde partie de logement au moyen de boulons serrés dans les trous traversants d'assemblage de telle sorte que la partie conique des manchons de guidage coniques marque une surface de contact (214) dans un trou traversant d'assemblage respectif de l'autre de la première partie de logement et la seconde partie de logement, le plan de raccordement incliné étant placé de telle sorte qu'un axe longitudinal des boulons ne soit pas perpendiculaire au plan (7 ; 155).

11. Procédé selon la revendication 10, comprenant :
- former (S107) au moins un trou alésé dans la première partie de logement et la seconde partie de logement, le trou alésé croisant le plan de raccordement incliné le long de la totalité de son axe longitudinal lorsque les parties de logement sont assemblées, de telle sorte que des parties de trou alésé arquées soient formées dans chacune de la première partie de logement et la seconde partie de logement.

12. Procédé selon la revendication 11, comprenant :
- séparer (S202) la première partie de logement de la seconde partie de logement ;
- adapter (S203) des paliers dans des parties de trou alésé arquées dans l'une ou l'autre de la première partie de logement et la seconde partie de logement, l'axe longitudinal du trou alésé coïncidant avec l'axe de rotation défini par le palier.

13. Procédé selon la revendication 12, comprenant :
- réassembler (S204) la première partie de logement et la seconde partie de logement au moyen de boulons serrés dans les trous d'assemblage et insérés à travers les manchons de guidage coniques, les manchons de guidage guidant la première partie de logement jusqu'à une position d'assemblage par la surface de contact marquée dans la première partie de logement.

14. Procédé selon l'une quelconque des revendications 10 à 13, dans lequel l'assemblage de la première partie de logement et la seconde partie de logement comprend le fait de serrer (S105) la première partie de logement et la seconde partie de logement l'une contre l'autre au moyen des boulons serrés dans les trous traversants d'assemblage.
